Europäisches Patentamt

(19) European Patent Office

Office européen des brevets

(11) Veröffentlichungsnummer: **0 211 296**
**B1**

(12) # EUROPÄISCHE PATENTSCHRIFT

(45) Veröffentlichungstag der Patentschrift:
**14.06.89**

(21) Anmeldenummer: **86109923.2**

(22) Anmeldetag: **19.07.86**

(51) Int. Cl.⁴: **G 11 B 15/467**, G 05 D 13/62

(54) Verfahren zur Phasenregelung von Motoren in Videorecordern.

(30) Priorität: **10.08.85 DE 3528762**

(43) Veröffentlichungstag der Anmeldung:
**25.02.87 Patentblatt 87/9**

(45) Bekanntmachung des Hinweises auf die Patenterteilung:
**14.06.89 Patentblatt 89/24**

(84) Benannte Vertragsstaaten:
**AT BE CH DE FR GB IT LI LU NL SE**

(56) Entgegenhaltungen:
**DE-B- 2 449 423**
**GB-A- 1 446 938**
**US-A- 3 600 508**

**PATENTS ABSTRACTS OF JAPAN, Band 6, Nr. 125**
**(P-127)[1003], 10. Juli 1982; & JP-A-57 52919**

(73) Patentinhaber: **Deutsche Thomson-Brandt GmbH,**
**Hermann-Schwer-Strasse 3 Postfach 1307,**
**D-7730 Villingen-Schwenningen (DE)**

(72) Erfinder: **Zimmermann, Horst, Am Elsenberg 16,**
**D-7730 VS-Marbach (DE)**
Erfinder: **Otto, Bernhard, Mailländerweg 4,**
**D-7732 Niedereschach 2 (DE)**

## Beschreibung

Die Erfindung betrifft ein Verfahren zur Phasenregelung von Motoren in Videorecordern bei der Wiedergabe von auf einem Magnetband aufgezeichneten Videosignalen unter Verwendung eines Phasenvergleichs zwischen den Kopfumschaltimpulsen mit den auf einer Spule des Magnetbandes aufgezeichneten Kontrollimpulsen sowie mit einer Möglichkeit zur Verstellung der Sollphasenlage des Motors.

Ein derartiges Verfahren ist aus der GB-A-1 446 938 bekannt.

Bei Videorecordern werden die Spuren von mehreren rotierenden Videoköpfen abgetastet. Damit die Köpfe bei der Wiedergabe die ihnen jeweils zugeordneten Spuren optimal abtasten, wird mit Hilfe von bei der Aufzeichnung der Videosignale mit aufgezeichneten aus den Vertikalsynchronsignalen abgeleiteten Kontrollimpulsen eine Phasenregelung des Bandtransportmotors vorgenommen, so daß die Videoköpfe jeweils über den abzutastenden Spuren positioniert sind. Die Kontrollimpulse werden bei der Wiedergabe von einem Kontrollkopf abgenommen. Dieser muß bei der Fertigung des Videorecorders genau justiert werden, damit jedes beliebige Videoband korrekt abgetastet werden kann. Die VHS-Norm schreibt z.B. vor, daß der Kontrollimpuls 6,5 Zeilen hinter dem Vertikalsynchronimpuls aufgezeichnet wird. Das erfordert eine hohe Genauigkeit der Einstellung des Kontrollkopfes. Wenn fremdbespielte Bänder über einen Videorecorder abgespielt werden, kommt es oftmals vor, daß die Videospuren in bezug auf die Kontrollimpulse nicht mehr optimal liegen und daß dadurch die Phase des Bandvorschubs nicht mehr mit einer optimalen Spurabtastung übereinstimmt. Es ist daher bekannt, durch bewußte Verschiebung des Kontrollimpulses die Phase derart nachzustellen, daß die Videoköpfe bezüglich der abzutastenden Spuren richtig liegen. Dazu dient ein sogenannter von außen bedienbarer Tracking-Steller, der es ermöglicht, von einer Mittelstellung, die der Normstellung entspricht, den Soll-Wert des Kontrollimpulses zu verstellen. Dies ist möglich in den Grenzen ±90° in bezug auf den Kopfschaltimpuls. Dies geschieht durch Verstellen eines Potentiometers, welches die Zeitkonstante eines Multivibrators verändert und somit die Flanke des Kontrollimpulses verschiebt. Bei einer Verschiebung in die eine oder andere Richtung verkleinert sich jedoch der Fangbereich der Phasenregelung dadurch, daß die Grenzen mit +90° und −90° festliegen. Bei einer Phasenverschiebung von z.B. +30° liegt der Fangbereich theoretisch bei +60° bis −120°. Da sich der Fangbereich praktisch jedoch symmetrisch auf die eingestellte Soll-Lage bezieht, verkleinert er sich auf ±60°.

Der Erfindung liegt die Aufgabe zugrunde, eine Phasenregelung mit einer Tracking-Einstellung von ±180° zu erreichen, d.h. über den gesamten Winkelbereich und auch darüber hinaus. Diese Aufgabe wird durch die im Kennzeichen des Patentanspruchs angegebene Erfindung gelöst. Sie bringt den Vorteil, daß bei Einstellung auf einen bestimmten Phasenwert der Fangbereich über ±180° erhalten bleibt, da die Regelung sowohl nach positiven als auch nach negativen Abweichungen nicht begrenzt ist wie beim bekannten Stand der Technik.

Nachstehend wird die Erfindung mit Hilfe der Zeichnung beschrieben.

Fig. 1 zeigt ein Diagramm für die Phasenregelung nach dem Stand der Technik;

Fig. 2 zeigt an einem Beispiel ein Diagramm der Phasenregelung nach dem nachstehend beschriebenen Verfahren.

Fig. 3 stellt schematisch eine Krafttrommel dar mit den Marken M1, M2 und M3.

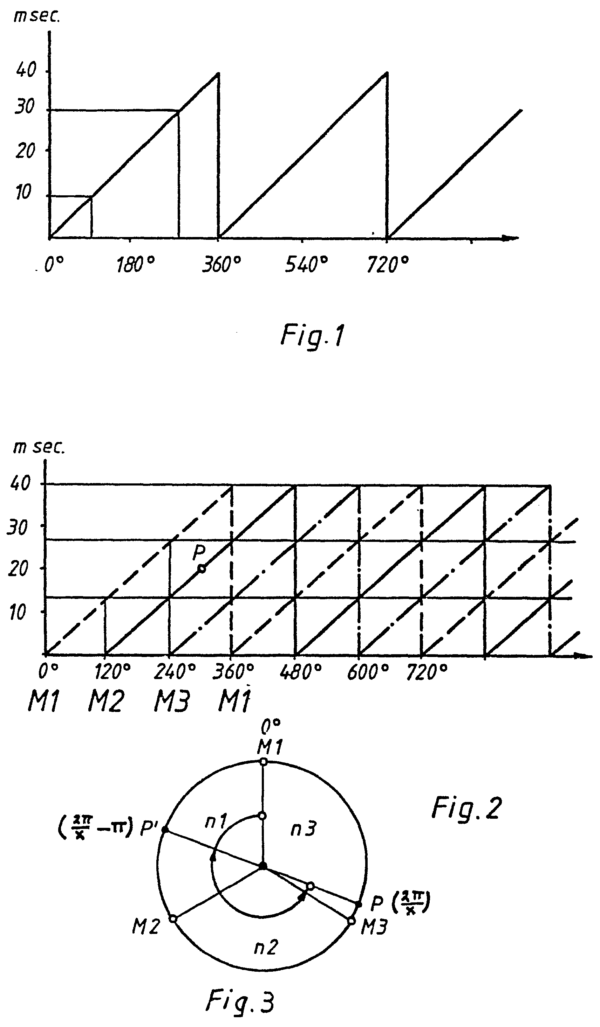

In Figur 1 ist der Phasenwert in msec über dem Drehwinkel der Kopftrommel aufgetragen. Bei einer Umdrehungszeit von T = 40 msec ergibt sich der gezeigte Verlauf pro Umdrehung der Kopftrommel. Es ergibt sich ein Meßbereich für die Phase von 0 bis 40 msec. Da die Messung bei jeder Umdrehung bzw. jedem Vergleichsimpuls, der z.B. bei 0 msec liegt, neu beginnt, kann der gemessene Wert bestimmte Größen nicht über- oder unterschreiten. Dies sind die Grenzwerte 0 msec und 40 msec. Bei Überschreiten eines Meßwertes von 40 msec wird der Ausgangspunkt der Messung auf die nachfolgende Umdrehung verlagert und die gemessenen Werte beginnen erneut bei 0 msec. Sind für die Regelung z.B. Abweichungen von 10 msec notwendig, so ist der Regelbereich an beiden Enden um diese 10 msec eingeschränkt, d.h. der eigentliche Regelbereich geht von 10 msec bis 30 msec. Das bedeutet, es können Phasenfehler von 90° bis 270° ausgeregelt werden, so daß eine Phaseneinstellung, die bei 180° liegt, um ±90° verändert werden kann.

Um diesen eingeengten Bereich zu vermeiden und um eine Möglichkeit zu schaffen, die Phase um ±180° ausregeln zu können, wird der Kopftrommelumfang in mehrere gleich grosse Bereiche unterteilt, von denen jeder einen Zentri-Winkel von $2\pi/N$ besitzt, wenn N die Anzahl der Bereiche darstellt.

In Figur 2 wird dies an einem Beispiel mit N = 3 erläutert. Die Bereiche sind durch Marken M begrenzt, die als Referenz zur Phasenmessung benutzt werden. Der erste Bereich n = 1 reicht von 0 bis 120°, der zweite Bereich n = 2 von 120 bis 240° und der dritte Bereich n = 3 von 240 bis 360°. Liegt der Sollwert zwischen 120° und 240°, wird die Marke M1 mit 0° als Referenz genommen. Wird die Grenze des ersten Regelbereichs 1 überschritten und wird auf den zweiten Regelbereich von 240 bis 360° umgeschaltet, so wird als Referenz die Marke M2, die bei 120° die Messung einleitet, verwendet. Auf diese Weise wird durch die Hintereinanderreihung von drei Regelbereichen 1 bis 3 mit den diesen zugeordneten Referenzpunkten M1 bis M3 erreicht, daß der Motor über 360°, d.h. um ±180° in der Phase geregelt

werden kann. Soll z.B. auf eine Phase $\dfrac{2\pi}{x}$ geregelt

werden, wobei x ein Bruchteil des ganzen Kreisbogens darstellt, so gilt als Referenzmarke die dem gespiegelten Punkt $\dfrac{2\pi}{x} - \pi$ am nächsten liegende Marke. Im gezeigten Beispiel ist das die Marke M2.

**Patentanspruch**

Verfahren zur Phasenregelung von Motoren in Videorecordern bei der Wiedergabe von auf einem Magnetband aufgezeichneten Videosignalen unter Verwendung eines Phasenvergleichs zwischen einem von mindestens einer auf dem Kopftrommelumfang angebrachten Marke gelieferten Markierungssignal mit den auf einer Spur des Magnetbandes aufgezeichneten Kontrollimpulsen, wobei die Sollphase der Kontrollimpulse einstellbar ist, dadurch gekennzeichnet, daß der Kopftrommelumfang N Marken aufweist und in N gleich grosse Bereiche unterteilt ist, die von den Marken begrenzt sind und daß bei einer Phaseneinstellung auf einen Punkt P in einem Bereich n, wobei $1 \leqslant n \leqslant N$, als Referenz zur Phasenmessung die dem zentrisch zur Kopftrommelachse gespiegelten Punkt P' nächstliegende Marke verwendet wird.

**Claim**

Method for the phase regulation of motors in video recorders during the reproduction of video signals recorded on a magnetic tape, using a phase comparison between a marking signal supplied by at least one mark applied to the head drum periphery and the control pulses recorded on a track of the magnetic tape, the desired phase of the control pulses being adjustable, characterised in that the head drum periphery comprises N marks and is subdivided into N regions of equal size which are delimited by the marks and that during a phase adjustment to a point P in a region n, with $1 \leqslant n \leqslant N$, the mark lying closest to the point P' reflected centrically with respect to the head drum axis is used as reference for the phase measurement.

**Revendication**

Procédé pour régler la phase de moteurs situés dans des enregistreurs vidéo, lors de la reproduction de signaux vidéo enregistrés sur une bande magnétique, moyennant l'utilisation d'une comparaison de phase entre un signal de marquage, délivré par au moins une marque disposée sur le pourtour du tambour porte-têtes, et les impulsions de contrôle enregistrées sur une piste de la bande magnétique, la phase de consigne des impulsions de contrôle étant réglable, caractérisé en ce que le pourtour du tambour porte-têtes comporte N marques et est subdivisé en N zones identiques, qui sont limitées par les marques, et que dans le cas d'un réglage de la phase sur un point P dans une zone n, avec $1 \leqslant n \leqslant N$, on utilise comme référence pour la mesure de la phase, la marque qui se situe immédiatement en aval du point P' symétrique par rapport à l'axe du tambour porte-têtes.

**Fig.1**

**Fig.2**

**Fig.3**